# EUROPEAN PATENT APPLICATION

(11) **EP 3 674 380 A1**
(43) Date of publication of application: **01.07.2020**
(21) Application number: 18397537.4
(22) Date of filing: 28.12.2018
(51) Int. Cl.: C09K 3/10, C09K 21/00, A62C 2/06, E04B 1/94, E06B 5/16, F16L 5/04, F16J 15/06

(54) **SEAL WITH INTUMESCENT MATERIAL**

(71) Applicant: FP FinnProfiles Oy, 38200 Sastamala (FI)
(72) Inventor: VUORIO, Atte, 38200 Sastamala (FI); LÄHETKANGAS, Tero, 38200 Sastamala (FI); KOLEHMAINEN, Jouko, 38200 Sastamala (FI)
(74) Representative: Laine IP Oy

(57) **Abstract**

According to an example aspect of the present invention, there is provided a seal comprising a profile having at least a contact part and a fastening part, wherein the contact part has a contact surface adapted for sealing a gap between the contact surface and an external surface and the fastening part is adapted to fasten the seal to an installation position of the seal, wherein the seal comprises at least two layers of intumescent material arranged to the profile, wherein the at least two layers comprise a first layer and a second layer, and the first layer and the second layer are configured to activate at different stages, when exposed to heat; and/or the first layer is configured to protect the contact part, when exposed to heat, and the second layer is configured to protect the fastening part, when exposed to heat.

## Description

### FIELD

Various example embodiments relate to seals, and in particular to seals comprising intumescent material.

### BACKGROUND

Seals are widely used in for example, construction, shipping, automotive and railway industries, such as in windows, door systems, ceilings, floors and walls to air conditioning systems, lightning systems and luggage compartment racks. They are generally used to block passage of fluids through gaps, joints or openings in materials. In some cases, seals also block dust, sound and heat transmission.

Fire resistant seals may be produced from heat resistant materials or they may comprise flexible cellular foam or sponge which has been impregnated with fire retardant materials for example, fibers and/or fillers. However, fire resistance may be only moderate in these cases, because the seal material cannot withstand high temperatures. Thus, sealing properties of the seal may deteriorate as the fire continues. In addition, fire retarding properties may be insufficient, because fire retardant materials do not slow or stop the spread of fire or reduce its intensity efficient enough.

Thus, there is need to enhance fire resistance and fire retarding properties of seals.

### SUMMARY OF THE INVENTION

The invention is defined by the features of the independent claims. Some specific embodiments are defined in the dependent claims.

According to a first aspect of the present invention, there is provided a seal comprising a profile having at least a contact part and a fastening part, wherein the contact part has a contact surface adapted for sealing a gap between the contact surface and an external surface, and the fastening part is adapted to fasten the seal to an installation position of the seal, wherein the seal comprises at least two layers of intumescent material arranged to the profile, wherein the at least two layers comprise a first layer and a second layer, the first layer and the second layer are configured to activate at different stages, when exposed to heat; and/or the first layer is configured to protect the contact part, when exposed to heat, and the second layer is configured to protect the fastening part, when exposed to heat.

The present seal with intumescent material provides several advantages. It provides a seal which has optimal sealing properties and fire retarding properties. In case of fire, intumescent material swells as a result of heat exposure and blocks the spread of fire. At the same time, intumescent material protects the seal and function of the seal providing a block for passage of fluid. Thus, it prevents fire, smoke, heat and other harmful substances from spreading from the sealed space. If the fire continues, reservoir of intumescent material enhances fire retardant properties of the seal and protection the seal at further stages of the fire.

### BRIEF DESCRIPTION OF THE DRAWINGS

FIGURE 1 illustrates a seal in accordance with at least some embodiments of the present invention;
FIGURES 2-6 illustrate examples of seals with intumescent material in accordance with at least some embodiments of the present invention; and
FIGURES 7-13 illustrate examples of different profiles of seals with intumescent material in accordance with at least some embodiments of the present invention.

### EMBODIMENTS

In the present context, the term "intumescent material" comprises a substance that swells as a result of heat exposure, thus increasing in volume and decreasing in density. Intumescent materials are typically used in passive fire protection. Intumescent materials slow or stop the spread of fire or reduce its intensity. Intumescent materials are typically arranged to construction products to provide fire protection of the products.

In the present context, the term "seal" or "gasket" comprises a product that used to close a gap, a joint or an opening to prevent passage of fluid through the gap, the joint or the opening between spaces. The passage may be prevented by the seal or the gasket, when the seal or the gasket is installed between surfaces forming the gap, the joint or the opening.

In the present context, the term "gap" or "joint" or "opening" is located between spaces. The gap provides communications of fluid between the spaces. Examples of the spaces comprise indoor spaces and outdoor spaces. Indoor spaces may be formed by structures, such as buildings, rooms, containers, vehicles or ducts or parts thereof. The gap may comprise a door or a shutter for controlling passage of the fluid. The gap, joint opening, door and/or shutter may be provided with one or more seals for preventing passage of fluid between the spaces.

In the present context, the term "seal profile" comprises a side view, outline, or representation of the seal.

In the present context, the term "outer surface" comprises a surface which is located on the outside of a seal profile and may be in contact with fluid.

In the present context, the term "inner surface" comprises a surface which is located inside of the seal profile and may not be in contact with fluid.

In the present context, the term "elastic" comprises materials which are capable of returning to their original shape after compression, expansion, stretching, or other deformation. Tensile strength of elastic material may be for example, 2-35 N/mm², particularly 3-15 N/mm². Elongation at break of elastic material may be for example, at least 100 %, particularly at least 300 %. For example, rubber, silicone, silicone rubber, and thermoplastic elastomer (TPE) are considered elastic.

In a case of a fire, it is important to isolate fire, smoke and other harmful substances, and prevent the fire from spreading from one space to another. Thus, fire doors and shutters between the spaces may be provided with fire retardant and resistant seals. However, sealing properties of the seals may deteriorate as the fire continues. Thus, as the fire continues, the seals may not prevent passage of fluid between the spaces anymore. There is now provided an improved fire retardant seal which comprise intumescent material.

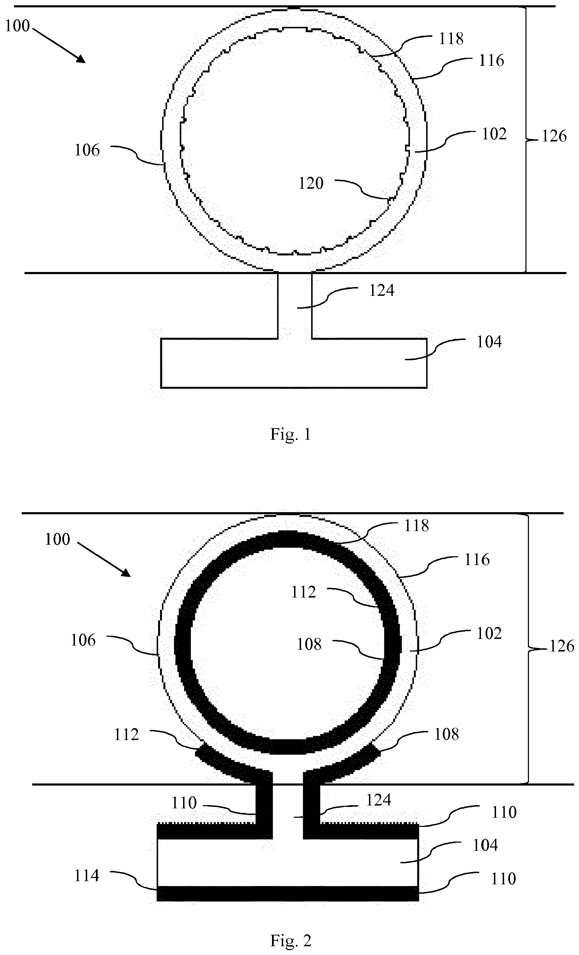

As illustrated in FIGURE 1, a seal 100 may comprise a profile having at least a contact part 102 and a fastening part 104. The contact part 102 is arranged between the surfaces of the gap 126 to be sealed. The contact part 102 may have a contact surface 106 adapted for sealing a gap between the contact surface and an external surface. The fastening part 104 may be adapted to fasten the seal to an installation position of the seal. The fastening part and/or connecting part may be arranged inside an end product for example, in a groove of the end product.

In an embodiment, the seal 100 may comprise a connecting part 124 between the contact part and the fastening part. The connecting part 124 connects the contact part 102 and the fastening part 104. In this way the connecting part may be connected to the installation position of the seal. In an example, the fastening part and the contact part may be separated by the connecting part. The connecting part may be configured to extend between the fastening part and the contact part such that the fastening part and the contact part may be separated by a dimension of the connecting part between the fastening part and the contact part.

In an embodiment, the seal 100 may comprise guiding means 120 for guiding a direction of expansion of intumescent material provided on the surface of the profile. Due to the guiding means, the intumescent material can be guided to right place to retard fire and to protect the seal. In addition, due to the guiding means, swelling and possible breaking of the seal can be avoided or at least reduced.

As illustrated in FIGURE 2, the seal 100 may comprise at least two layers of intumescent material arranged to the profile. A first layer 108 of the at least two layers and a second layer 110 of the at least two layers may be configured to activate at different stages when exposed to heat; and/or the first layer 108 may be configured to protect the contact part 102 and the second layer 110 may be configured to protect the fastening part 104, when exposed to heat. At least two layers of intumescent material may enhance fire retardant properties and protection of the seal at different stages of the fire. In addition, at least two layers of intumescent material protect different parts of the seal in case of fire, and if the fire continues. Moreover, at least two layers of intumescent material may protect surfaces of the gap to be sealed.

The seal may comprise a number of layers, particularly 2-10, preferably 2-3, layers of intumescent material arranged to the profile. The layers may be configured to activate at different stages when exposed to heat; and/or the layers may be configured to protect different parts of the seal when exposed to heat. At least two layers of intumescent material enhance fire retardant properties and protection of the seal at different stages of the fire. In addition, at least two layers of intumescent material may protect different parts of the seal in case of fire, and if the fire continues. Moreover, at least two layers of intumescent material protect surfaces of the gap to be sealed.

In an embodiment, the first layer 108 may be arranged to a first location 112 of the profile and the second layer 110 may be arranged to a second location 114 of the profile, wherein the first location 112 and the second location 114 may have different heat exposures, when the gap is sealed by the seal. Instead or in addition to different heat exposures, the first layer 108 may be arranged to a different location of the profile than the second layer 110, wherein the first layer 108 and the second layer 110 are of intumescent materials having different heat responses. Then, the first layer and the second layer may activate at different times, and the first layer and the second layer may protect the seal and the surfaces of the gap at different stages of fire. The first layer arranged to a first location may protect the seal at the early stages of fire and the second layer arranged to a second location may protect the seal as the fire continues. Arranging the layers to the different locations of the profile enhance fire retardant properties of the seal and function of the seal at different stages of the fire.

The first location 112 may be at the contact part 102 or close to the contact part 102 and the second location 114 may be protected from exposure to heat, when the gap 126 is sealed by the seal, as illustrated in FIGURE 2. The second location 114 may be at the fastening part 104 and/or connecting part 124. The fastening part and/or connecting part may be arranged inside an end product, where the seal is used for sealing the gap. For example the fastening part and/or connecting part may be arranged to a groove of the end product. Then, intumescent material arranged to the first location retards fire and protects the contact part from fire, and the second location acts as a reservoir for intumescent material and retards fire if the fire continues. This enhances fire retardant properties of the seal and protection the seal at different stages of the fire.

As illustrated in FIGURE 2, a seal 100 may comprise a profile having at least a contact part 102 and a fastening part 104. The contact part 102 may be arranged between the surfaces of the gap 126 to be sealed. The contact part 102 may have a contact surface 106 adapted for sealing a gap between the contact surface and an external surface. The fastening part 104 may be adapted to fasten the seal to an installation position of the seal. The first layer 108 of intumescent material may be arranged to an outer surface 116 and/or an inner surface 118 of the contact part 102. Intumescent material arranged to the outer surface retards fire and protects the contact part from fire. Intumescent material arranged to the inner surface acts as a reservoir for intumescent material and retards fire if the fire continues. This enhances fire retardant properties of the seal and protection the seal at different stages of the fire.

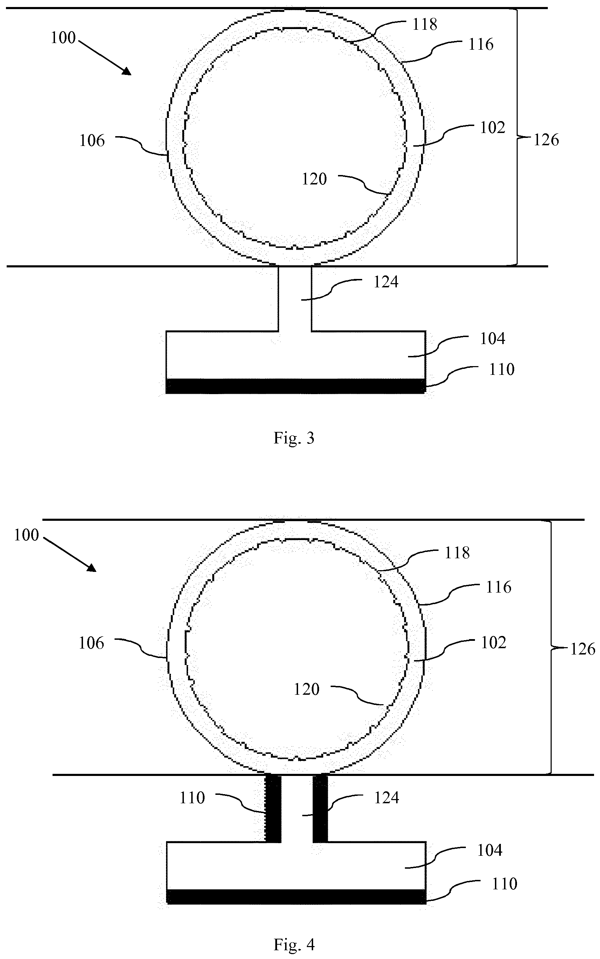

FIGURES 2-6 illustrate, that the second layer 110 may be arranged to the fastening part 104. Then, the second layer protects the fastening part from fire and may act as a reservoir for intumescent material, if the second layer activates after the first layer as the fire continues. This enhances fire retardant properties of the seal.

FIGURES 2 and 4-6 illustrate, that the second layer 110 may be arranged to a connecting part 124 between the contact part 102 and the fastening part 104. Then, the second layer protects the connecting part from fire and prevents the contact part from detaching from the fastening part. In addition, the second layer enhances fire retardant properties of the seal.

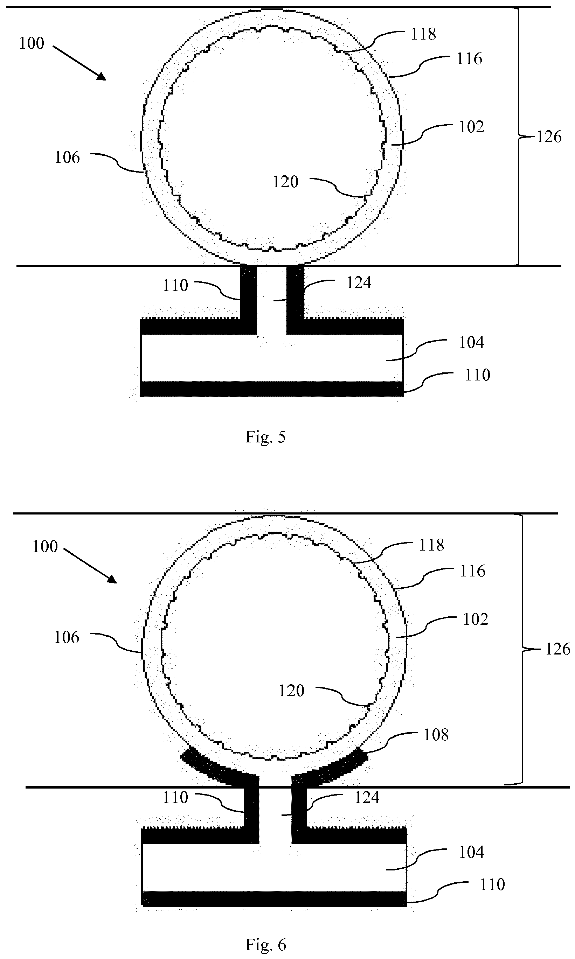

In an embodiment, the seal 100 may comprise more than one second layer 110 of intumescent material and the second layers 110 are configured to activate at different stages, when exposed to heat. FIGURE 6 illustrates, that one second layer may be arranged on connecting part 124 and a further second layer may be arranged on the fastening part 104. Thus, second layers may protect different parts of the seal in case of fire. Moreover, the second layers may have different heat exposures and/or comprise different intumescent materials with different heat responses. Thus, they may active at different stages of fire. This enhances fire retardant and resistance properties of the seal. In addition, more than one second layer protects different parts of the seal and function of the seal at different stages of the fire.

FIGURES 2-6 illustrate, that at least a part of the contact surface 106 may be free of intumescent material. This provides a good contact between the seal and the surfaces of the gap to be sealed.

In the following, the same reference numbers are used to refer same or different parts.

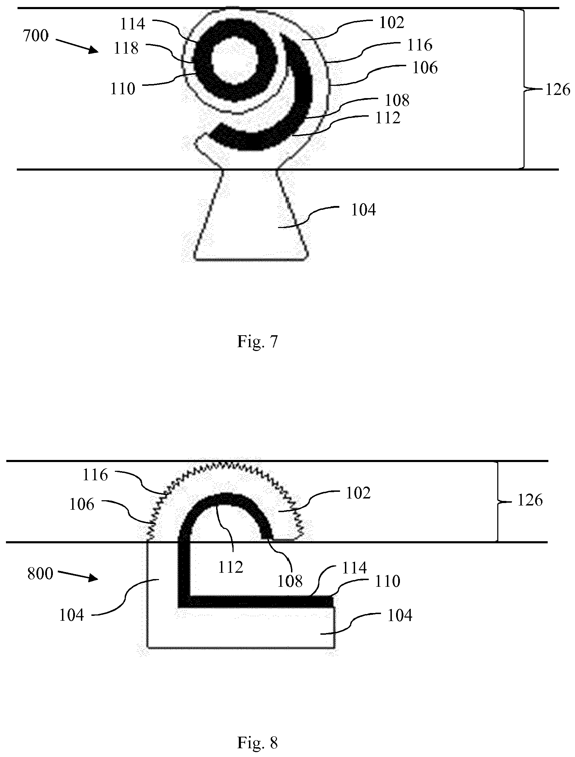

FIGURES 7-13 illustrates examples of seals 700-1300in accordance with at least some embodiments of the present invention. The seals 700-1300may have several different profiles and intumescent material may be arranged on one or more surfaces or locations of the profiles. Intumescent material may be arranged to the inner and/or the outer surface 118, 116 of the contact part 102. Alternatively or in addition, intumescent material may be arranged on a fastening part 104 and/or a connecting part 124.

FIGURE 7 illustrates a seal 700, which comprise a contact part 102 and a fastening part 104. The contact part 102 is arranged between the surfaces of the gap 126 to be sealed. Intumescent material is provided on an outer surface 116 and an inner surface 118 of the contact part. The first layer 108 of intumescent material is provided on the first location 112 of the contact part. The second layer 110 of intumescent material is provided on the second location 114 of the contact part. The first layer 108 protects the seal and sealing properties of the seal in case of a fire and retards the fire. The second layer 110 acts and a reservoir for intumescent material and retards the fire as the fire continues.

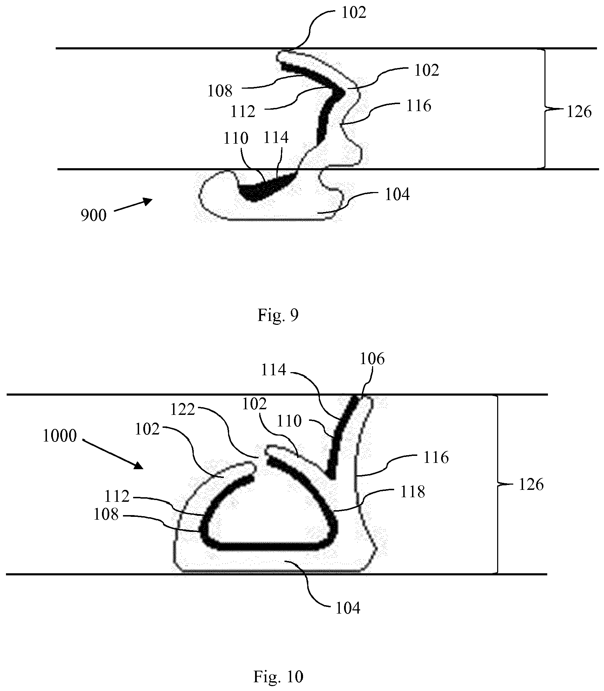

FIGURES 8 and 9 illustrate seals 800, 900, which comprise a contact part 102 and a fastening part 104. The contact part 102 is arranged between the surfaces of the gap 126 to be sealed. The first layer 108 of intumescent material is provided on the contact part 102 and the second layer 110 is provided on the fastening part 104. The first layer 108 and the second layer 110 protect the seal and sealing properties of the seal in case of a fire and retard the fire.

In an embodiment, the guiding means 120 may comprise that strength of the profile is weakened at least one location of the contact part 102, when the layer of intumescent material is arranged to the inner surface 118 of the contact part 102. This enables flow of intumescent material from the inner surface of the contact part to the outer surface of the contact part. Weakening of strength of the profile guides a direction of expansion of intumescent material. Thus, the intumescent material can be guided to right place to retard fire and to protect the seal. In addition, swelling and possible breaking of the seal can be avoided or at least reduced, because intumescent material is guided to the right direction.

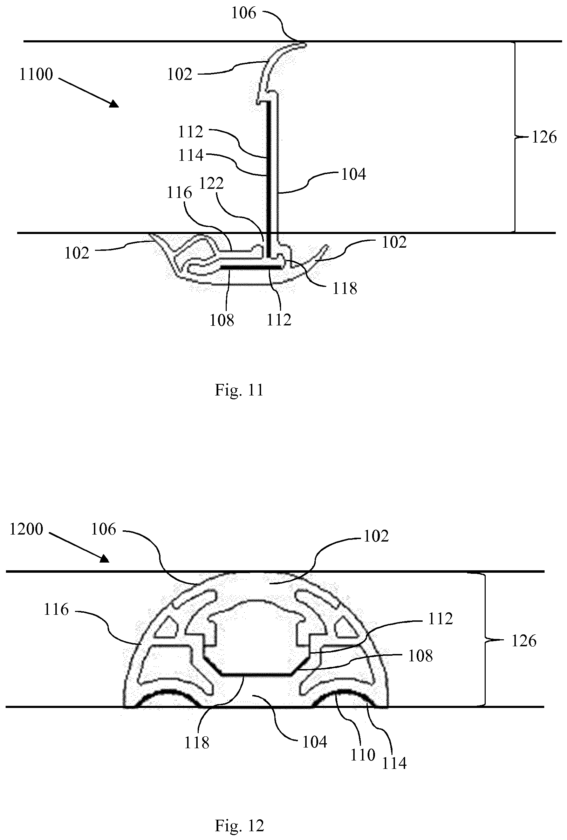

FIGURES 10 and 11 illustrate seals 1000, 1100 which comprise a contact part 102 and a fastening part 104. The guiding means may comprise an opening 122 between an outer surface 116 of the profile and the inner surface 118 of the contact part 102 such that expansion of the intumescent material of the first layer 108 is provided out of the profile, when the first layer 108 is arranged to the inner surface 118. The second layer 110 may be arranged to the outer surface 116. The contact part 102 is arranged between the surfaces of the gap 126 to be sealed. The opening 122 enables flow of intumescent material from the inner surface to the outer surface of the profile, retards fire and protects the seal from fire. In addition, the opening prevents the seal from breaking, because it provides free way for intumescent material to flow out of the profile.

FIGURE 12 illustrates a seal 1200, which comprise a contact part 102 and a fastening part 104. The contact part 102 is arranged between the surfaces of the gap 126 to be sealed. The first layer 108 of intumescent material is arranged on the second location 114 of the contact part 102 and the second layer 110 is provided on the fastening part 104. The first layer 108 and the second layer 110 retards the fire as the fire continues.

The contact part 102 of the seal may be elastic to prevent flow of fluid through the gap. The elastic seal returns to their original shape after compression, expansion, stretching, or other deformation. The elastic contact part adapts to the profile and surface topography of the gap. This ensures reliable and tight sealing.

The seal 100 may comprise a body of elastomeric material. The elastomeric material may be elastomer, which comprise long chainlike molecules or polymers, which are capable of recovering their original shape after being stretched.The elastomeric material may be for example, rubber, silicone, silicone rubber, or thermoplastic elastomer (TPE).

Rubber may be synthetic rubber. Rubber compound may be for example, ethylene propylene diene monomer (EPDM), chloroprene rubber (CR), styrene butadiene rubber (SBR), nitrile rubber (NBR), or isoprene rubber (IR). Rubber compound are elastic and resilient.

Silicones, also known as polysiloxanes, are polymers that include any inert, synthetic compound made up of repeating units of siloxane, which is a chain of alternating silicon atoms and oxygen atoms, combined with carbon, hydrogen, and sometimes other elements. Silicone is an excellent choice for seals when weather and heat resistance is needed.

Silicone rubber is an elastomer composed of silicone containing silicon together with carbon, hydrogen, and oxygen. Silicone rubber is non-reactive and stable. It is resistant to extreme environments and can be used at wide temperature range while still maintaining its useful properties.

Thermoplastic elastomers (TPE), sometimes referred to as thermoplastic rubbers, are a class of copolymers or a physical mix of polymers (usually a plastic and a rubber) which consist of materials with both thermoplastic and elastomeric properties. TPE have good thermal properties and material stability when exposed to a broad range of temperatures.

According to an embodiment, the fastening part 104 may be metal reinforced. The fastening part may comprise for example, metal wire. The metal wire may be for example, stainless steel wire, which is provided inside the profile during the extrusion process. The metal reinforcement is a reliable way of fixing the seal profile to an end product without the need for tape, adhesive or a separate fixing plate or profile. In addition, there is no need to use a mounting rail or groove when installing the profile. This in turn, allows the simplifying of the design of the seal.

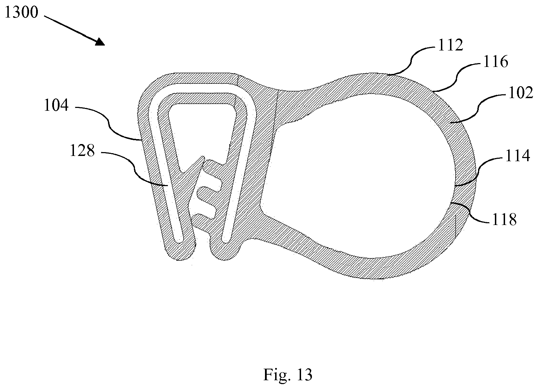

FIGURE 13 illustrates a metal reinforced seal 1300. The seal comprise a contact part 102 and a fastening part 104. The seal may be attached to an end product by the fastening part. The fastening part 104 comprises a metal reinforcement 128, which may be metal wire. The metal reinforcement may be arranged at least in part inside of the fastening part. The first layer 108 of intumescent material may be provided on the contact part 102 and the second layer 110 may be provided on the fastening part 104. The first layer 108 and the second layer 110 of intumescent material protect the seal and sealing properties of the seal in case of a fire and retard the fire.

The seal profile may be produced by extrusion. In an extrusion process, material is pushed through a die of the desired cross-section in an extruder. The seal profiles with complex cross-sections can be produced by the process. Extrusion may be continuous producing long continuous profiles or semi-continuous producing many pieces of profiles.

The metal wire may be provided to the seal profile by the extrusion process. While the seal material may be extruded with the first extruder, the metal wire may be provided by the second extruder. The second extruder may feed the metal wire to the presently extruded seal profile forming a metal reinforced seal profile.

After extrusion, the seal profile may be vulcanized. Vulcanization may be used for rubber, silicone rubber or TPE. Vulcanization increases rigidity and durability of the seal profile. Vulcanization temperature can be selected according to the seal profile material.

After vulcanization, the seal profile may be cooled to room temperature for further handling and processing. The seal profile may be cooled by water and/or at room temperature.

Intumescent material may be for example, in the form of paint, tape, wire, sheet, powder or dispersion. More than one intumescent material layer may be added. Intumescent material may form flexible and elastic coating, which may have excellent adhesion to the seal.

Intumescent material may comprise fire retardant substance(s) and/or compound(s) for example, graphite, triphenyl phosphate, mono-ammonium phosphates and/or sodium silicate as the active ingredient.

Different intumescent material layers arranged to the profile may comprise same and/or different intumescent materials. Then, the intumescent material layers may activate at different stages due to their different heat responses.

According to an embodiment, intumescent material may be arranged to the seal straight after producing the seal or it may be arranged to the already existing seal. Instead or in addition, intumescent material may be arranged to the seal already during producing of the seal.

An intumescent material may swell as a result of heat exposure, thus increasing in volume and decreasing in density. Intumescent material may swell for example, 20-50 times larger. Intumescent material may start to form intumescent protection layer for example, temperatures exceeding 150 °C. The seal may comprise two or more intumescent materials, which have different reaction temperatures. Due to chemical reactions the intumescent material may form solid protection compound during different stages of fire.

A seal according to an embodiment provides several advantages. It provides a seal which has optimal sealing properties and fire retarding properties. In case of fire, intumescent material swells as a result of heat exposure and blocks the spread of fire. At the same time, intumescent material protects the seal and function of the seal providing a block for passage of fluid. Thus, it prevents fire, smoke, heat and other harmful substances from spreading from the sealed space. If the fire continues, reservoir of intumescent material enhances fire retardant properties of the seal and protection the seal at further stages of the fire.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

At least some embodiments of the present invention find industrial application in fire retardant seals.

### ACRONYMS LIST

- CR: chloroprene rubber
- EPDM: ethylene propylene diene monomer
- IR: isoprene rubber
- NBR: nitrile rubber
- SBR: styrene butadiene rubber
- TPE: thermoplastic elastomer

### REFERENCE SIGNS LIST

- 100: seal
- 102: contact part
- 104: fastening part
- 106: contact surface
- 108: first layer
- 110: second layer
- 112: first location
- 114: second location
- 116: outer surface
- 118: inner surface
- 120: guiding means
- 122: opening
- 124: connecting part
- 126: gap
- 128: metal reinforcement
- 700-1300: seal

## Claims

1. A seal comprising a profile having at least a contact part and a fastening part, wherein the contact part has a contact surface adapted for sealing a gap between the contact surface and an external surface, and the fastening part is adapted to fasten the seal to an installation position of the seal, wherein the seal comprises at least two layers of intumescent material arranged to the profile, wherein the at least two layers comprise a first layer and a second layer, and
- the first layer and the second layer are configured to activate at different stages, when exposed to heat; and/or
- the first layer is configured to protect the contact part, when exposed to heat, and the second layer is configured to protect the fastening part, when exposed to heat.

2. The seal according to claim 1, comprising:
- the first layer is arranged to a first location of the profile and the second layer is arranged to a second location of the profile, wherein the first location and the second location have different heat exposures, when the gap is sealed by the seal, and/or
- the first layer is arranged to a different location of the profile than the second layer, wherein the first layer and the second layer are of intumescent materials having different heat responses.

3. The seal according to claim 2, wherein the first location is at the contact part or close to the contact part and the second location is protected from exposure to heat, when the gap is sealed by the seal.

4. The seal according to any of claims 1 to 3, wherein the first layer of intumescent material is arranged to an outer surface and/or an inner surface of the contact part.

5. The seal according to any of claims 1 to 4, wherein the seal comprises guiding means for guiding a direction of expansion of the intumescent material.

6. The seal according to claim 5, wherein the guiding means comprises that strength of the profile is weakened at least at least one location of the contact part, when the layer of intumescent material is arranged to the inner surface of the contact part.

7. The seal according to claim 5, wherein the guiding means comprises an opening between an outer surface of the profile and the inner surface of the contact part such that expansion of the intumescent material of the first layer is provided out of the profile, when the first layer is arranged to the inner surface.

8. The seal according to any of claims 2 to 7, wherein the second layer is arranged to the fastening part.

9. The seal according to any of claims 2 to 8, wherein the second layer is arranged to a connecting part between the contact part and the fastening part.

10. The seal according to any of claims 2 to 9, wherein the seal comprises more than one second layer of intumescent material and the second layers are configured to activate at different stages, when exposed to heat.

11. The seal according to any of claims 1 to 10, wherein at least a part of the contact surface is free of intumescent material.

12. The seal according to any of claims 1 to 11, wherein the contact part of the seal is elastic to prevent flow of fluid through the gap.

13. The seal according to any of claims 1 to 12, wherein the seal comprises a body of elastomeric material.

14. The seal according to any of claims 1 to 13, wherein the fastening part is metal reinforced.
